(19) Europäisches Patentamt
European Patent Office
Office européen des brevets

(11) **EP 2 786 010 B1**

(12) **EUROPÄISCHE PATENTSCHRIFT**

(45) Veröffentlichungstag und Bekanntmachung des Hinweises auf die Patenterteilung:
**30.12.2015 Patentblatt 2015/53**

(21) Anmeldenummer: **12772099.3**

(22) Anmeldetag: **04.10.2012**

(51) Int Cl.:
*F02M 63/00* *(2006.01)*    *F02M 61/10* *(2006.01)*
*F16K 31/00* *(2006.01)*    *F02M 61/08* *(2006.01)*
*F02M 61/20* *(2006.01)*    *F02M 51/06* *(2006.01)*

(86) Internationale Anmeldenummer:
**PCT/EP2012/069565**

(87) Internationale Veröffentlichungsnummer:
**WO 2013/075876 (30.05.2013 Gazette 2013/22)**

(54) **VENTIL ZUM ZUMESSEN EINES STRÖMENDEN MEDIUMS**

VALVE FOR METERING IN A FLOWING MEDIUM

SOUPAPE DE DOSAGE D'UN MILIEU EN ÉCOULEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.11.2011 DE 102011087005**

(43) Veröffentlichungstag der Anmeldung:
**08.10.2014 Patentblatt 2014/41**

(73) Patentinhaber: **Robert Bosch GmbH**
**70442 Stuttgart (DE)**

(72) Erfinder: **SEBASTIAN, Thomas**
**71729 Erdmannhausen (DE)**

(56) Entgegenhaltungen:
**EP-A1- 1 731 754        EP-A1- 1 995 447**
**EP-A2- 1 111 230        DE-A1-102009 026 532**
**DE-A1-102009 027 528    US-B1- 6 311 950**

## Beschreibung

Stand der Technik

Die Erfindung geht aus von einem Ventil zum Zumessen eines strömenden Mediums, insbesondere eines Fluids, nach dem Oberbegriff des Anspruchs 1.

Ein bekanntes, vorzugsweise als Kraftstoff-Einspritzventil eingesetztes Ventil dieser Art (DE 10 2009 026 532 A1) weist ein Ventilgehäuse, eine nach außen öffnende Ventilnadel mit Schließkopf sowie zur Ventilnadelbestätigung einen auf die Ventilnadel wirkenden piezoelektrischen Aktor und ein an der Ventilnadel angreifendes Rückstellelement auf. Zum dosierten Abspritzen von Kraftstoff ist eine im Kraftstoffstrom angeordnete Zumessöffnung von einem Ventilsitz umgeben, der zum Freigeben und Verschließen der Zumessöffnung mit dem Schließkopf zusammenwirkt. Der piezoelektrische Aktor liegt kraftschlüssig an dem schließkopffernen Ende der Ventilnadel an, und der Angriffspunkt des Rückstellelements liegt nahe dem schließkopffernen Ende der Ventilnadel. Der piezoelektrische Aktor weist einen Piezomodul aus einer Vielzahl von aneinanderliegenden, piezoelektrischen Elementen, einen sog. Piezostack, auf, der zwischen einem Abschlusskörper und einer Abschlussplatte mittels eines als Feder ausgebildeten Hohlkörpers eingespannt ist. Das Rückstellelement ist eine Schaubendruckfeder, die konzentrisch zur Ventilnadel angeordnet ist und sich einerseits an einem Federteller, der an dem den Aktor zugekehrten Ende der Ventilnadel befestigt ist, und andererseits ventilgehäuseseitig abstützt. Bei Bestromung des piezoelektrischen Aktors längt sich der Aktor und verschiebt die Ventilnadel gegen die Kraft der Rückstellfeder, so dass der Schließkopf vom Ventilsitz abhebt und die Zumessöffnung freigibt. Nach Wegfall der Bestromung presst die an der Ventilnadel angreifende Schraubendruckfeder den Schließkopf auf den Ventilsitz auf, so dass die Zumessöffnung geschlossen ist.

Aus der EP 1 111 230 A2 ist bereits ein Ventil zum Zumessen eines strömenden Mediums, insbesondere eines Fluids, bekannt. Das Ventil hat eine im Fluidstrom angeordnete, von einem Ventilsitz umschlossene Zumessöffnung, eine die Zumessöffnung steuernde Ventilnadel, die einen mit dem Ventilsitz zum Schließen und Freigeben der Zumessöffnung zusammenwirkenden Schließkopf aufweist, und einen zum Freigeben der Zumessöffnung auf die Ventilnadel wirkenden piezoelektrischen Aktor. Außerdem weist das Ventil ein zum Schließen der Zumessöffnung an der Ventilnadel angreifendes federelastisches Rückstellelement auf, wobei der ventilnadelseitige Angriffspunkt des Rückstellelements an oder nahe an dem den Schließkopf tragenden Ende der Ventilnadel liegt. Dabei handelt es sich um eine flanschartigen Ringkragen der Ventilnadel.

Eine ähnliche Lösung ist ebenfalls bereits aus der US 6,311,950 B1 bekannt, bei der die Rückstellfeder in Schließkopfnähe der Ventilnadel angreift. Als Rückstellelement kann dabei auch ausschließlich ein Wellbalg vorgesehen sein.

Aus der EP 1 731 754 A1 ist bereits ein Brennstoffeinspritzventil mit einem piezoelektrischen Aktor bekannt, bei dem eine Rückstellfeder und ein Wellbalg zum Abdichten ineinander geschachtelt auf gleicher Höhe im Ventil vorgesehen sind.

Offenbarung der Erfindung

Das erfindungsgemäße Ventil mit den Merkmalen des Anspruchs 1 hat den Vorteil, dass durch die Verlegung des Angriffspunkts des Rückstellelements dicht an den Schließkopf der bei Ventilnadelbetätigung für einen eingeforderten Hub des Schließkopfs notwendige Hub des piezoelektrischen Aktors kleiner bemessen werden kann. Da der Hub des piezoelektrischen Aktors wesentlich durch das Volumen des Piezostack als fertigungstechnisch teuerstes Teil des Aktors bestimmt ist, verkleinert sich mit der Hubreduzierung das Volumen des Piezostack und damit die Fertigungskosten für Aktor und Ventil.

Die Reduzierung des erforderlichen Aktorhubs bei unverändertem Hub des Schließkopfs zum Öffnen und Schließen der Zumessöffnung wird dadurch erzielt, dass infolge der Verlegung des Angriffspunkts des Rückstellelements an oder so dicht an den Schließkopf, wie dies nach den baulichen Gegebenheiten möglich ist, ein auf die Ventilnadel zurückgehender Hubverlust beim Schließen der Zumessöffnung kleiner wird. Dieser Hubverlust entsteht infolge elastischer Längung der Ventilnadel im Schließzustand des Ventils, die abhängig ist von der Rückstell- oder Schließkraft des Rückstellelements, der effektiven Länge der Ventilnadel zwischen Schließkopf und Angriffspunkt der Schließkraft, der Querschnittsfläche und des E-Moduls der Ventilnadel. Dadurch, dass durch die Angriffspunktverlegung die effektive Länge der Ventilnadel deutlich kleiner wird, wird der Hubverlust der Ventilnadel kleiner und somit auch der vom Aktor zusätzlich zum geforderten Hub des Schließkopfs aufzubringende Hub.

Gemäß der Erfindung wird die Verlegung des ventilnadelseitigen Angriffspunkts des Rückstellelements dadurch erreicht, dass das Rückstellelement eine Hülse sowie eine auf die Hülse mit zum Aktor gerichteter Druckkraft wirkende Druckfeder aufweist. Die Hülse weist vorzugsweise einen Hülsenschaft und einen vom Hülsenschaft radial abstehenden Flansch auf, ist konzentrisch zur Ventilnadel angeordnet und mit ihrem dem Schließkopf zugewandten Ende im Angriffspunkt des Rückstellelements fest mit der Ventilnadel verbunden. Eine sich beim Schließen des Ventils ergebende Dehnung der Hülse geht nicht in die Wirkkette des Aktors ein und führt zu keinerlei Hubverlust durch die Ventilnadel. Die Hülse kann kostengünstig als Tiefzieh- oder Drehteil hergestellt werden, und als Druckfeder wird eine konzentrisch zum Hülsenschaft angeordnete Schraubendruckfeder eingesetzt, die sich am Flansch und ventilfest abstützt.

Durch die in den weiten Ansprüchen aufgeführten Maßnahmen sind vorteilhafte Weiterbildungen und Verbesserungen des im Anspruch 1 angegebenen Ventils möglich.

Gemäß einer vorteilhaften Ausführungsform der Erfindung weist der Hülsenschaft einen durchmesserkleineren und einen durchmessergrößeren Schaftabschnitt auf. Der durchmesserkleinere Schaftabschnitt ist auf die Ventilnadel weitgehend formschlüssig aufgeschoben und an seinem freien Stirnende im ventilnadelseitigen Angriffspunkt des Rückstellelements nahe des Schließkopfs mit der Ventilnadel verschweißt. Der Flansch ist am freien Ende des durchmessergrößeren Schaftabschnitts an diesen einstückig angeformt. Durch diese konstruktive Ausführung des Rückstellelements wird eine kompakte, bauraumsparende Bauweise erzielt. Ventilnadel und Schließkopf sind einstückig ausgebildet, und der Aktor liegt unmittelbar am schließkopffernen Ende der Ventilnadel an.

Kurze Beschreibung der Zeichnungen

Die Erfindung ist anhand von in den Zeichnungen dargestellten Ausführungsbeispielen in der nachfolgenden Beschreibung näher erläutert. Es zeigen:

     Figur 1 ausschnittweise einen Längsschnitt eines Ventils zum Zumessen eines Fluids,

     Figur 2 eine gleiche Darstellung wie in Figur 1 gemäß einer nicht beanspruchten Konfiguration.

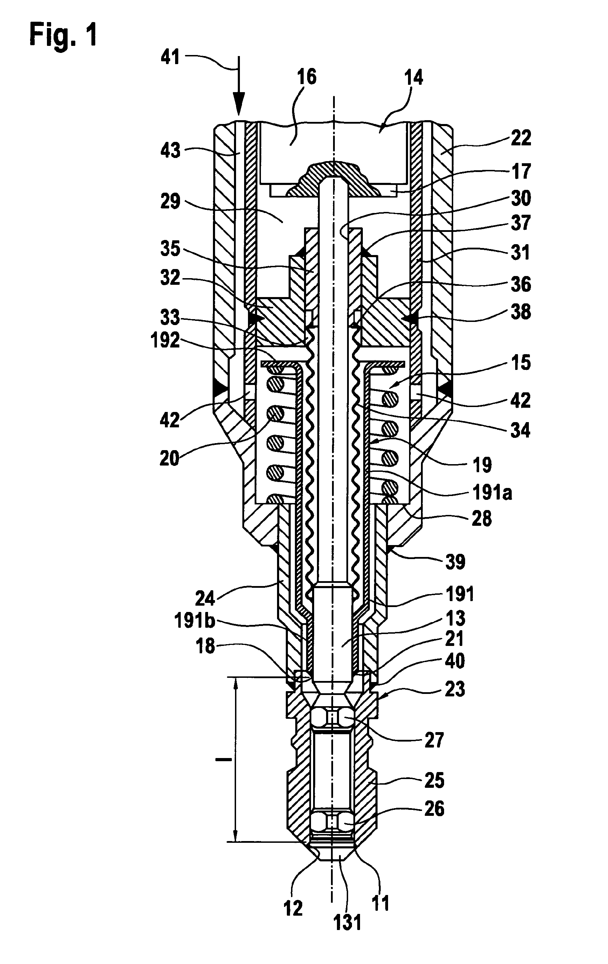

Das in Figur 1 im Längsschnitt dargestellte Ventil zum Zumessen eines strömenden Mediums, insbesondere eines Fluids, wird beispielsweise als Einspritzventil zum Einspritzen von Kraftstoff in den Verbrennungszylinder einer Brennkraftmaschine eingesetzt. Figur 1 zeigt dabei den Längsschnitt des einspritzseitigen Endes des Einspritzventils, wobei das komplette Ventil beispielsweise in DE 10 2009 026 532 A1 dargestellt und beschrieben ist.

Als Hauptkomponenten weist das Ventil eine im Fluidstrom angeordnete Zumessöffnung 11, die von einem Ventilsitz 12 umschlossen ist, eine die Zumessöffnung 11 steuernde Ventilnadel 13, die einen mit dem Ventilsitz 12 zum Schließen und Freigeben der Zumessöffnung 11 zusammenwirkenden, vorzugsweise mit der Ventilnadel 13 einstückig ausgeführten Schließkopf 131 trägt, einen auf die Ventilnadel 13 wirkenden piezoelektrischen Aktor 14 zum Freigeben der Zumessöffnung 11 und ein an der Ventilnadel 13 angreifendes federelastisches Rückstellelement 15 zum Schließen der Zumessöffnung 11 auf. Der piezoelektrische Aktor 14, der in Figur 1 nur abschnittweise dargestellt ist, besitzt in bekannter Weise einen elektrisch ansteuerbaren Piezomodul oder Piezostack, der mittels eines als Feder ausgebildeten Hohlkörpers 16 zwischen einer Abschlussplatte 17 und einem Abschlusskörper eingespannt ist (vgl. hierzu auch DE 10 2009 026 532 A1).

Die Kosten des Einspritzventils werden im wesentlichen durch den Piezostack bestimmt, wobei der für die Ventilbetätigung erforderliche Hub des piezoelektrischen Aktors 14 das Volumen des Piezostack bestimmt, das seinerseits durch die Verwendung von Edelmetallen für die Elektroden die Kosten des piezoelektrischen Aktors 14 wesentlich beeinflusst. Neben dem für die definierte Ventilöffnung geforderten Hub des Schließkopfs 131 muss der piezoelektrische Aktor 14 eine zusätzlichen Hub erbringen, um einen sog. Hubverlust der Ventilnadel 13 zu kompensieren. Dieser Hubverlust $\Delta l$ der Ventilnadel 13, der durch eine Längung der Ventilnadel 13 im Schließzustand des Ventils infolge der auf die Ventilnadel 13 wirkenden Schließ- oder Rückstellkraft des Rückstellelements 15 verursacht ist, ist abhängig von der Schließkraft F des Rückstellelements 15, der effektiven Länge $l_{eff}$ der Ventilnadel 13 zwischen dem Schließkopf 131, genauer gesagt der auf den Ventilsitz 12 aufschlagenden Fläche des Schließkopfs 131, und dem Angriffspunkt des Rückstellelements 15 an der Ventilnadel 13, dem E-Modul E und dem Querschnitt A der Ventilnadel 13 gemäß

$$\Delta l = \frac{F \cdot l_{eff}}{E \cdot A}$$

Um den Hubverlust $\Delta l$ zu minimieren und damit den erforderlichen Hub des piezoelektrischen Aktors 14 zu verkleinern und somit eine deutliche Kostenreduzierung zu erreichen, liegt - wie aus Figur 1 ersichtlich ist - der ventilnadelseitige Angriffspunkt 18 des Rückstellelements 15 am oder möglichst nahe an dem den Schließkopf 131 tragenden Ende der Ventilnadel 13. Als "möglichst nahe" wird "so nahe wie durch die baulichen Gegebenheiten im Ventil möglich" verstanden.

Um dies zu realisieren weist im Ausführungsbeispiel der Figur 1 das Rückstellelement 15 eine Hülse 19 sowie eine auf die Hülse 19 mit einer zum piezoelektrischen Aktor 14 gerichteten Druckkraft wirkende Druckfeder 20 auf. Die Hülse 19 besitze einen Hülsenschaft 191 und einen vom Hülsenschaft 191 radial abstehenden Flansch 192. Die Hülse 19 ist konzentrisch zur Ventilnadel 13 angeordnet und mit ihrem flanschfernen Ende im Angriffspunkt 18 des Rückstellelements 15 fest mit der Ventilnadel 13 verbunden. Der Hülsenschaft 191 weist einen endseitig den Flansch 192 tragenden durchmessergrößeren Schaftabschnitt 191a und einen durchmesserkleineren Schaftabschnitt 191 b auf, der auf die Ventilnadel 13 aufgeschoben ist, formschlüssig auf dieser aufliegt und an seinem flanschfernen, freien Stirnende mit der Ventilnadel 13 verschweißt ist, was in Figur 1 durch die Schweißnaht 21 angedeutet ist. Die Druckfeder 20 ist vorzugsweise eine konzentrisch zum Hülsenschaft 191 angeordnete Schraubendruckfeder, die sich ventilfest und am Flansch 192 abstützt.

Die vorstehend beschriebenen Komponenten des Ventils sind in einem Ventilgehäuse 22 und einem im Ventilgehäuse 22 festgelegten, aus diesem herausragenden Düsenkörper 23 integriert. Der im Ausführungsbeispiel der Figur 1 zweiteilig ausgeführte Düsenkörper 23 weist einen hohlzylindrischen Ventileinsatz 24, der mit dem Ventilgehäuse 22 verschweißt ist, und einen an das ventilgehäuseferne Ende des Ventileinsatzes 24 angeschweißten Ventilsitzträger 25 auf, an dem Ventilsitz 12 und Zumessöffnung 11 ausgebildet sind. Die Ventilnadel 13 ist mit zwei voneinander beabstandeten Gleitkränzen 26, 27 im hohlen Innern des Ventilsitzträgers 25 geführt und durch die Schließkraft der Druckfeder 20 mit ihrem nach außen öffnenden Schließkopf 131 auf den Ventilsitz 12 aufgepresst, wobei die als Schraubendruckfeder ausgebildete Druckfeder 20 sich zwischen dem Flansch 192 der Hülse 19 und einer im Ventilgehäuse 22 ausgebildeten Radialschulter 28 abstützt. Alternativ oder zusätzlich kann der ventilfeste Abstützpunkt der Druckfeder 20 auch an dem Düsenkörper 23, und hier am Ventileinsatz 24, liegen.

Der nicht kraftstoffresistente piezoelektrische Aktor 14 ist in einem gegen das Medium abgedichteten Ventilraum 29 angeordnet. Die Ventilnadel 13 ist durch eine Zentralöffnung 30 in den Ventilraum 29 bis hin zum piezoelektrischen Aktor 14 hineingeführt und liegt unter der Wirkung der Druckfeder 20 kraftschlüssig an der Abschlussplatte 17 des piezoelektrischen Aktors 14 an. Vorzugsweise ist die Anlage des schließkopffernen Endes der Ventilnadel 13 an der Abschlussplatte 17 als kardanisches Lager ausgebildet. Zur Abdichtung der Zentralöffnung 30 für die Durchführung der Ventilnadel 13 ist ein im durchmessergrößeren Schaftabschnitt 191a der Flanschhülse 19 die Ventilnadel 13 umschließender Wellbalg 34 vorgesehen, der mit einem Balgende auf der Ventilnadel 13 mediumdicht befestigt ist und mit dem anderen Balgende die Zentralöffnung 30 mediumdicht umschließt. Wie aus Figur 1 ersichtlich ist, wird der mediumdichte Ventilraum 29 von einem im Ventilgehäuse 22 festgelegten Rohr 31 gebildet, dessen dem Düsenkörper 23 zugekehrtes Rohrende von einem in das Rohrende eingesetzten Endstück 32 mediumdicht abgeschlossen ist. Zur Realisierung der Zentralöffnung 30 für den Ventilraum 29 weist das Endstück 32 ein Zentralloch 33 auf, in die eine Gleitmuffe 35 mediumdicht und unverschieblich eingesetzt ist, in der die Ventilnadel 13 gleitet. Das andere Balgende des Wellbalgs 34 ist auf der Gleitmuffe 35 befestigt. Die Befestigung des Wellbalgs 34 auf der Gleitmuffe 35 ist in Figur 1 durch eine Schweißnaht 36, die Befestigung der Gleitmuffe 35 im Endstück 32 durch die Schweißnaht 37 und die Befestigung des Endstücks 32 im Rohr 31 durch die Schweißnaht 38 angedeutet. Die Verbindung von Ventilgehäuse 22 und Ventileinsatz 24 ist durch die Schweißnaht 39 und die Verbindung von Ventileinsatz 24 und Ventilsitzträger 25 durch die Schweißnaht 40 dargestellt. Das Medium, also das Fluid oder der Kraftstoff, strömt von einem durch Pfeil 41 symbolisch angedeuteten Zufluss durch einen zwischen Rohr 31 und Ventilgehäuse 22 vorhandenen Ringspalt 43 und tritt über im Rohr 31 außerhalb des gegen das Medium abgedichteten Ventilraums 29 angeordnete Radialbohrungen 42 in den Düsenkörper 23 ein, um unter Systemdruck am Schließkopf 131 anzustehen.

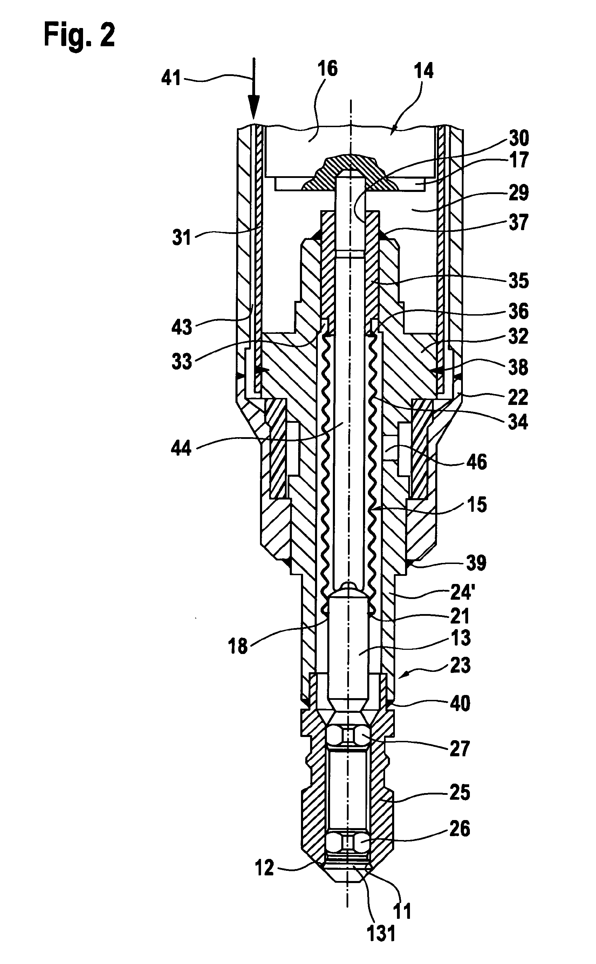

Das in Figur 2 ausschnittweise im Längsschnitt dargestellte Ventil stimmt weitgehend mit dem zuvor beschriebenen Ventil überein, so dass gleiche Bauteile mit gleichen Bezugszeichen versehen sind. Dieses Ventil ist gegenüber dem zuvor beschriebenen Ventil gemäß Figur 1 insoweit modifiziert, als dass das aus Flansch, Hülse und Druckfeder bestehende Rückstellelement entfallen ist und als Rückstellelement 15 der Wellbalg 34 herangezogen ist, der zur Abdichtung des Zugangs zu dem den piezoelektrischen Aktor 14 aufnehmenden, gegen das Medium abgedichteten Ventilraum 29 eingesetzt ist. Der metallische Wellbalg 34 ist mit dem einen Balgende im Angriffspunkt 18 des Rückstellelements 15 auf der Ventilnadel 13 mediumdicht befestigt und umschließt mediumdicht mit seinem anderen Balgende die für den Zugang zum piezoelektrischen Aktor 14 vorgehaltene Zentralöffnung 30 des Ventilraums 29, so dass er auch hier neben seiner Rückstellfunktion für den Schließkopf 131 seine Abdichtfunktion beibehält. Die Wirkverbindung zwischen der Ventilnadel 13 und dem piezoelektrischen Aktor 14 ist durch einen Stößel 44 hergestellt, der im Innern des Wellbalgs 34 angeordnet ist und sich einerseits an dem in den Wellbalg 34 hineinragenden Ende der Ventilnadel 13 und andererseits an der Abschlussplatte 17 des piezoelektrischen Aktors 14 jeweils kraftschlüssig abstützt. Beide Abstützstellen sind vorzugsweise als kardanische Lagerungen ausgeführt, um einen querkraftfreien Betrieb der Ventilnadel 13 zu erzielen. Der Stößel 44 ist auf Länge zugepaart, so dass sich im verbauten Zustand die gewünschte Schließ- oder Rückstellkraft des federelastischen Wellbalgs 34 an der Ventilnadel 13 einstellt.

Wie bei dem Ventil gemäß Figur 1 ist der den piezoelektrischen Aktor 14 aufnehmende Ventilraum 29 mittels eines im Ventilgehäuse 22 festgelegten Rohrs 31 gebildet, dessen dem Düsenkörper 23 zugekehrtes Rohrende von dem in das Rohrende eingesetzten, das Zentralloch 33 aufweisenden Endstück 32 mediumdicht abgeschlossen ist. Anders als bei dem Ventil gemäß Figur 1 ist das Endstück 32 kein separates Bauteil, sondern einstückig an den Ventileinsatz 24' des Düsenkörpers 23 angeformt. Die mediumdichte Verbindung zwischen Rohr 31 und Endstück 32 ist wiederum durch die Schweißnaht 38 hergestellt. In das Zentralloch 33 des Endstücks 32 ist wiederum eine Gleitmuffe 35 eingesetzt, die mittels der Schweißnaht 37 fest mit dem Endstück 32 verbunden ist. Das die Zentralöffnung 30 mediumdicht abschließende Ende des Wellbalgs 34 ist auf der Gleitmuffe 35 mittels der Schweißnaht 36 mediumdicht festgelegt, und der Stößel 43 ist axial verschieblich in der Gleitmuffe 35 aufgenommen. Der Mediumstrom im Ventilgehäuse 22 führt von dem durch Pfeil 41 angedeuteten Mediumzufluss über den zwischen Ventilgehäuse 22 und Rohr 31 vorhandenen Ringspalt 43 und über Radialbohrungen 46 im Ventileinsatz 24' des Düsenkörpers 23 zu Ventilnadel 13 und Schließkopf 131.

**Patentansprüche**

1. Ventil zum Zumessen eines strömenden Mediums, insbesondere eines Fluids, mit einer im Fluidstrom angeordneten, von einem Ventilsitz (12) umschlossenen Zumessöffnung (11), mit einer die Zumessöffnung (11) steuernden Ventilnadel (13), die einen mit dem Ventilsitz (12) zum Schließen und Freigeben der Zumessöffnung (11) zusammenwirkenden Schließkopf (131) aufweist, mit einem zum Freigeben der Zumessöffnung (11) auf die Ventilnadel (13) wirkenden piezoelektrischen Aktor (14) und mit einem zum Schließen der Zumessöffnung (11) an der Ventilnadel (13) angreifenden federelastischen Rückstellelement (15), wobei das Rückstellelement (15) eine Hülse (19) sowie eine auf die Hülse (19) mit zum Aktor (14) gerichteter Druckkraft wirkende Druckfeder (20) aufweist und die Hülse (19) konzentrisch zur Ventilnadel (13) angeordnet ist, **dadurch gekennzeichnet, dass** der ventilnadelseitige Angriffspunkt (18) des Rückstellelements (15) an oder nahe an dem den Schließkopf (131) tragenden Ende der Ventilnadel (13) liegt und die Hülse (19) mit ihrem dem Schließkopf (131) zugekehrten Ende im Angriffspunkt (18) des Rückstellelements (15) fest mit der Ventilnadel (13) verbunden ist.

2. Ventil nach Anspruch 1, **dadurch gekennzeichnet, dass** die Hülse (19) einen Hülsenschaft (191) und einen vom Hülsenschaft (191) radial abstehenden Flansch (192) aufweist und dass die Druckfeder (20) eine Schraubendruckfeder ist, die konzentrisch zum Hülsenschaft (191) angeordnet ist und sich am Flansch (192) abstützt.

3. Ventil nach Ansprüche 2, **dadurch gekennzeichnet, dass** der Hülsenschaft (191) einen durchmesserkleineren und einen durchmessergrößeren Schaftabschnitt (191b, 191a) aufweist, dass der durchmesserkleinere Schaftabschnitt (191b) auf der Ventilnadel (13) aufliegt und an seinem freien Stirnende mit der Ventilnadel (13) verschweißt ist und dass am freien Ende des durchmessergrößeren Schaftabschnitts (191a) der Flansch (192) einstückig ausgeformt ist.

4. Ventil nach einem der Ansprüche 1 bis 3, **dadurch gekennzeichnet, dass** Ventilnadel (13) und Schließkopf (131) einstückig ausgebildet sind und der piezoelektrische Aktor (14) an dem schließkopffernen Ende der Ventilnadel (13) kraftschlüssig anliegt.

5. Ventil nach einem der Ansprüche 2 bis 4, **dadurch gekennzeichnet, dass** Ventilsitz (12) und Zumessöffnung (11) an einem Düsenkörper (23) ausgebildet sind, der in einem Ventilnadel (13), Aktor (14) und Rückstellelement (15) aufnehmenden Ventilgehäuse (22) befestigt ist, und dass die am Flansch (192) sich abstützende Druckfeder (20) sich weiterhin am Düsenkörper (23) und/oder an einer im Ventilgehäuse (22) ausgebildeten Radialschulter (28) abstützt.

6. Ventil nach Anspruch 4 oder 5, **dadurch gekennzeichnet, dass** der Aktor (14) in einem gegen das Medium abgedichteten Ventilraum (29) angeordnet ist, die Ventilnadel (13) durch eine Zentralöffnung (30) in den Ventilraum (29) hineingeführt ist und ein einen Abschnitt der Ventilnadel (13) umschließender Wellbalg (34) mit einem Balgende auf der Ventilnadel (13) mediumdicht befestigt ist und mit dem anderen Balgende die Zentralöffnung (30) zum Ventilraum (29) mediumdicht umschließt.

7. Ventil nach Anspruch 6, **dadurch gekennzeichnet, dass** der Ventilraum (29) von einem im Ventilgehäuse (22) festgelegten Rohr (31) gebildet ist, dessen den Düsenkörper (23) zugekehrtes Rohrende von einem in das Rohrende eingesetzten, ein Zentralloch (33) aufweisenden Endstück (32) mediumdicht abgeschlossen ist, und dass die Zentralöffnung (30) für die Durchführung der Ventilnadel (13) mit einer im Zentralloch (33) des Endstücks (32) mediumdicht festgesetzten, die Ventilnadel (13) führenden Gleitmuffe (35) realisiert ist, auf der das andere Balgende des Wellbalgs (34) befestigt ist.

**Claims**

1. Valve for metering a flowing medium, in particular a fluid, having a metering orifice (11) which is arranged in the fluid flow and which is surrounded by a valve seat (12), having a valve needle (13) which controls the metering orifice (11) and which has a closing head (131) which interacts with the valve seat (12) in order to close and open up the metering orifice (11), having a piezoelectric actuator (14) which acts on the valve needle (13) in order to open up the metering orifice (11), and having a resiliently elastic restoring element (15) which engages on the valve needle (13) in order to close the metering orifice (11), wherein the restoring element (15) has a sleeve (19) and a pressure spring (20) which acts on the sleeve (19) with a pressure force directed toward the actuator (14), and the sleeve (19) is arranged concentrically with respect to the valve needle (13), **characterized in that** the engagement point (18) of the restoring element (15) on the valve needle is situated at or close to that end of the valve needle (13) which bears the closing head (131), and the sleeve (19) is, by way of its end facing toward the closing head (131), fixedly connected to the valve needle (13) at the engagement point (18) of the restoring element (15).

2. Valve according to Claim 1, **characterized in that** the sleeve (19) has a sleeve shank (191) and a flange (192) which protrudes radially from the sleeve shank (191), and **in that** the pressure spring (20) is a helical pressure spring which is arranged concentrically with respect to the sleeve shank (191) and which is supported on the flange (192).

3. Valve according to Claim 2, **characterized in that** the sleeve shank (191) has a relatively small-diameter and a relatively large-diameter shank section (191b, 191a), **in that** the relatively small-diameter shank section (191b) lies against the valve needle (13) and is welded by way of its free end side to the valve needle (13), and **in that** the flange (192) is integrally formed on the free end of the relatively large-diameter shank section (191a).

4. Valve according to one of Claims 1 to 3, **characterized in that** valve needle (13) and closing head (131) are formed integrally, and the piezoelectric actuator (14) bears in non-positively locking fashion against that end of the valve needle (13) which is remote from the closing head.

5. Valve according to one of Claims 2 to 4, **characterized in that** valve seat (12) and metering orifice (11) are formed on a nozzle body (23) which is fastened in a valve housing (22) which receives valve needle (13), actuator (14) and restoring element (15), and **in that** the pressure spring (20), which is supported on the flange (192), is also supported on the nozzle body (23) and/or on a radial shoulder (28) formed in the valve housing (22).

6. Valve according to Claim 4 or 5, **characterized in that** the actuator (14) is arranged in a valve chamber (29) which is sealed off with respect to the medium, the valve needle (13) is guided into the valve chamber (29) through a central orifice (30), and a corrugated bellows (34) which surrounds a section of the valve needle (13) is fastened by way of one bellows end in medium-tight fashion to the valve needle (13) and, by way of the other bellows end, encloses the central orifice (30) in medium-tight fashion with respect to the valve chamber (29).

7. Valve according to Claim 6, **characterized in that** the valve chamber (29) is formed by a tube (31) which is fixed in the valve housing (22) and whose tube end facing toward the nozzle body (23) is closed off in medium-tight fashion by an end piece (32) which is inserted into the tube end and which has a central hole (33), and **in that** the central orifice (30) for the leadthrough of the valve needle (13) is realized with a sliding bushing (35) which is fixed in medium-tight fashion in the central hole (33) of the end piece (32) and which guides the valve needle (13) and to which the other bellows end of the corrugated bellows (34) is fastened.

## Revendications

1. Soupape de dosage d'un milieu en écoulement, en particulier d'un fluide, avec une ouverture de dosage (11) disposée dans un courant de fluide, entourée par un siège de soupape (12), avec un pointeau de soupape (13) commandant l'ouverture de dosage (11), lequel présente une tête de fermeture (131) coopérant avec le siège de soupape (12) pour fermer et ouvrir l'ouverture de dosage (11), avec un actionneur piézoélectrique (14) agissant sur le pointeau de soupape (13) pour ouvrir l'ouverture de dosage (11) et avec un élément de rappel (15) élastique à ressort s'engageant avec le pointeau de soupape (13) pour fermer l'ouverture de dosage (11), l'élément de rappel (15) présentant une douille (19) ainsi qu'un ressort de compression (20) agissant sur la douille (19) avec une force de pression orientée vers l'actionneur (14) et la douille (19) étant disposée concentriquement par rapport au pointeau de soupape (13), **caractérisée en ce que** le point d'engagement (18) de l'élément de rappel (15) du côté du pointeau de soupape est situé au niveau de ou à proximité de l'extrémité du pointeau de soupape (13) portant la tête de fermeture (131) et la douille (19) est connectée fixement, par son extrémité tournée vers la tête de fermeture (131), au pointeau de soupape (13) dans le point d'engagement (18) de l'élément de rappel (15).

2. Soupape selon la revendication 1, **caractérisée en ce que** la douille (19) présente une tige de douille (191) et une bride (192) faisant saillie radialement depuis la tige de douille (191) et **en ce que** le ressort de compression (20) est un ressort de compression à boudin qui est disposé concentriquement par rapport à la tige de douille (191) et qui s'appuie contre la bride (192).

3. Soupape selon la revendication 2, **caractérisée en ce que** la tige de douille (191) présente une portion de tige de plus petit diamètre (191b) et une portion de tige de plus grand diamètre (191a), **en ce que** la portion de tige de plus petit diamètre (191b) s'applique sur le pointeau de soupape (13) et est soudée à son extrémité frontale libre au pointeau de soupape (13) et **en ce que** la bride (192) est formée d'une seule pièce à l'extrémité libre de la portion de tige de plus grande diamètre (191a).

**4.** Soupape selon l'une quelconque des revendications 1 à 3, **caractérisée en ce que** le pointeau de soupape (13) et la tête de fermeture (131) sont réalisés d'une seule pièce et l'actionneur piézoélectrique (14) s'applique par engagement par force contre l'extrémité éloignée de la tête de fermeture du pointeau de soupape (13).

**5.** Soupape selon l'une quelconque des revendications 2 à 4, **caractérisée en ce que** le siège de soupape (12) et l'ouverture de dosage (11) sont réalisés au niveau d'un corps de buse (23) qui est fixé dans un boîtier de soupape (22) recevant le pointeau de soupape (13), l'actionneur (14) et l'élément de rappel (15), et **en ce que** le ressort de compression (20) s'appuyant contre la bride (192) s'appuie en outre contre le corps de buse (23) et/ou contre un épaulement radial (28) réalisé dans le boîtier de soupape (22).

**6.** Soupape selon la revendication 4 ou 5, **caractérisée en ce que** l'actionneur (14) est disposé dans un espace de soupape (29) étanchéifié par rapport au milieu, le pointeau de soupape (13) est guidé à l'intérieur de l'espace de soupape (29) à travers une ouverture centrale (30) et un soufflet ondulé (34) entourant une portion du pointeau de soupape (13) est fixé de manière étanche au milieu avec une extrémité de soufflet sur le pointeau de soupape (13) et entoure de manière étanche au milieu, avec l'autre extrémité de soufflet, l'ouverture centrale (30) vers l'espace de soupape (29).

**7.** Soupape selon la revendication 6, **caractérisée en ce que** l'espace de soupape (29) est formé par un tube (31) fixé dans le boîtier de soupape (22), dont l'extrémité de tube tournée vers le corps de buse (23) est fermée de manière étanche au milieu par un embout (32) inséré dans l'extrémité de tube, présentant un trou central (33), et **en ce que** l'ouverture centrale (30) est réalisée pour le passage du pointeau de soupape (13) avec un manchon coulissant (35) guidant le pointeau de soupape (13), fixé de manière étanche au milieu dans le trou central (33) de l'embout (32), sur lequel manchon coulissant est fixée l'autre extrémité de soufflet du soufflet ondulé (34).

EP 2 786 010 B1

## Fig. 1

# Fig. 2

**EP 2 786 010 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009026532 A1
- EP 1111230 A2
- US 6311950 B1
- EP 1731754 A1